# EUROPÄISCHE PATENTSCHRIFT

(11) **EP 0 728 514 B1**
(45) Veröffentlichungstag und Bekanntmachung des Hinweises auf die Patenterteilung: **24.06.1998**
(21) Anmeldenummer: 96102478.3
(22) Anmeldetag: 19.02.1996
(51) Int. Cl.: B01D 53/047

(54) **Druckwechseladsorptionsanlage**
Pressure swing adsorption device
Dispositif d'adsorption à pression alternée

(30) Priorität: 27.02.1995 DE 19506761
(43) Veröffentlichungstag der Anmeldung: 28.08.1996
(73) Patentinhaber: Linde Aktiengesellschaft, 65189 Wiesbaden (DE)
(72) Erfinder: Benkmann, Christian, Dipl.-Ing., D-82166 Gräfelfing (DE)
(74) Vertreter: Zahn, Christoph

(56) Entgegenhaltungen:
- EP-A- 0 006 138
- EP-A- 0 045 404
- EP-A- 0 236 850

## Beschreibung

Die Erfindung betrifft eine Druckwechseladsorptionsanlage, mit mindestens zwei phasenverschoben arbeitenden Adsorptionseinheiten, bei der jede Adsorptionseinheit abwechselnd in den Arbeitszuständen "Adsorption" und "Desorption" mit einer oder mehreren zwischengeschalteten Druckausgleichs - und/oder Spülphasen betrieben wird.

Beim Betrieb von Druckwechseladsorptionsanlagen kommt es von Zeit zu Zeit vor, daß aufgrund einer Ventilstörung oder eines undichten Ventils derjenige Adsorber, zu dem das gestörte oder undichte Ventil gehört, außer Betrieb genommen werden muß und die Druckwechseladsorptionsanlage mit einer verminderten Adsorberanzahl weiter betrieben wird. Um bei einer reduzierten Adsorberanzahl einen bezüglich Ausbeute und Reinheit optimalen Betrieb zu gewährleisten, ist in der Regel eine Änderung des Taktschemas unumgänglich.

Aus der EP-A 0 006 138 ist ein kontinuierliches Druckwechseladsorptionsverfahren bekannt, bei dem eine Vielzahl von Ventilen nach einem vorgegebenen ersten Taktschema geschaltet werden. Während des kontinuierlichen Betriebes kann ein defektes Ventil durch Vergleich von charakteristischen physikalischen Meßwerten mit vorgegebenen Sollwerten in mehreren aufeinander folgenden Taktschritten ermittelt werden. Ist das defekte Ventil ermittelt, wird auf ein zweites vorgegebenes Taktschema unter Auslassung derjenigen Adsorptionseinheit, zu der das defekte Ventil gehört, umgeschaltet.

Trotz dieser Verfahrensführungen führt das Abschalten eines Adsorbers bei Ventilstörungen zu teilweise starken Prozeßstörungen, die auch bei der Wiederinbetriebnahme des abgeschalteten Adsorbers nach der erfolgten Ventilreparatur auftreten. Die Betriebsweise mit verminderter Adsorberzahl hat zur Folge, daß nur mit geringerer Rohgasmenge und damit bei verminderter Produktion gearbeitet werden kann.

Um derartige Prozeßstörungen zu vermeiden, wurden bereits Druckwechseladsorptionsanlagen realisiert, bei denen zusätzliche Adsorber eingebaut werden. Diese zusätzlichen Adsorber "laufen" im normalen Betrieb mit, dienen jedoch nur als Reserve. Im Fall einer Ventilstörung kann dann die Druckwechseladsorptionsanlage mit voller Produktionskapazität weiter betrieben werden. So werden z.B. Druckwechseladsorptionsanlagen mit 5 Adsorbern ausgestattet, wobei das Druckwechseladsorptionsverfahren so ausgelegt ist, daß bereits beim Betrieb von lediglich 4 Adsorbern die volle Produktmenge erreicht wird. So wird die Druckwechseladsorptionsanlage, solange 5 Adsorber im Betrieb sind in einem 5/2/1-Verfahren betrieben, wobei die erste Zahl für die Anzahl der Adsorber, die zweite Zahl für die Anzahl der Adsorber die sich gleichzeitig im Adsorptionstakt befinden und die dritte Zahl für die Druckausgleichstakte steht. Bei einer Ventilstörung und damit verbunden dem Abschalten eines Adsorbers wird von diesem 5/2/1-Verfahren auf ein 4/1/1-Verfahren zurückgeschaltet. Die Adsorberbehälter werden dazu strömungsmäßig so dimensioniert, daß die volle Einsatzgasmenge auch durch nur einen Adsorberbehälter strömen kann, statt wie im "Normalbetrieb" durch zwei zeitgleich in der Adsorptionsphase befindliche Adsorber. Bei größeren Druckwechseladsorptionsanlagen werden oft 12/4/4-Verfahren realisiert, bei denen zwei der Adsorber als Reserveadsorber vorgesehen sind, so daß ohne Einschränkungen auf ein 10/2/4-Verfahren zurückgeschaltet werden kann. Diese zusätzlich benötigten Reserveadsorber sind jedoch vergleichsweise teuer, so daß sie in der Regel nur bei denjenigen Druckwechseladsorptionsverfahren bzw. -anlagen Verwendung finden, bei denen eine Minderung der Produktion unerwünscht ist.

Aufgabe der vorliegenden Erfindung ist es, eine Anlage anzugeben, die bei vergleichsweise geringem technischem Aufwand und damit verbunden geringen Kosten ein Konstanthalten der Produktion bei etwaigen Ventilstörungen ermöglicht.

Das wird erfindungsgemäß dadurch erreicht, daß zusätzlich zu der bzw. den vorhandenen Ventillinien zwischen den Adsorbern, die für die Druckausgleichs- und/oder Spülphasen benötigt werden, mindestens eine Reserveventillinie vorgesehen ist.

Gemäß dem Erfindungsgedanken wird bei einem als defekt erkannten Ventil einer Druckausgleichs- und/oder Spülleitung nicht der zu dieser Ventillinie gehörige Adsorber, sondern die defekte Ventillinie außer Betrieb genommen und durch eine parallel dazu angeordnete Reserveventillinie ersetzt. Derartige Reserveventillinien sind wesentlich billiger als der Einbau eines oder mehrerer Reserveadsorbers. Dadurch, daß die defekte Ventillinie erfindungsgemäß durch die Reserveventillinie ersetzt wird, kann mit unveränderten Parametern weiter produziert werden. Es ist theoretisch denkbar, daß zu jeder Ventillinie nicht nur eine, sondern gegebenenfalls mehrere Reserveventillinien existieren. Eine derartige Vorgehensweise macht dann Sinn, wenn unter allen Umständen verhindert werden muß, daß die Produktion bei einer Ventilstörung in einer der Druckausgleichs- und/oder Spülleitungen eingeschränkt wird.

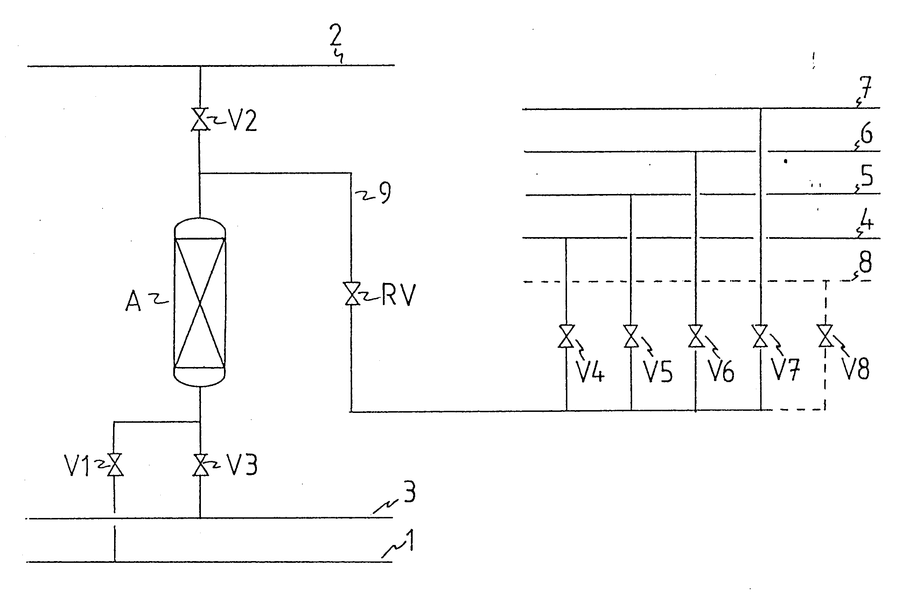

Die Erfindung sowie weitere Ausgestaltungen davon seien im folgenden anhand der Figur näher erläutert.

Zur Erläuterung des erfindungswesentlichen Gedankens ist die Darstellung eines einzelnen Adsorbers A ausreichend. Dieser sei einer der Adsorber eines Mehradsorberverfahrens, wobei dieses Mehradsorberverfahren vier Druckausgleichs- bzw. Spülleitungen 4 bis 7 benötigt. Ein derartiges Mehradsorberverfahren wird z.B. durch ein 10/2/4- oder 9/2/3-Verfahren realisiert. Befindet sich der Adsorber A in der Druckaufbau-und/oder Adsorptionsphase, so wird ihm bei geöffnetem Ventil V1 über die Rohgasleitung 1 das zu zerlegende bzw. zu reinigende Gasgemisch zugeführt. Während der Adsorptionsphase ist Ventil V2 geöffnet, so daß über die Produktleitung 2 der nicht am Adsorptionsmittel adsorbierte Teil des dem Adsorbers A zugeführten Rohgases abgezogen wird. Beinhaltet das Adsorptionsverfahren eine Gegenstromentspannung und/oder Spülung, so kann das dabei über das Eintrittsende des Adsorbers A entweichende Gas, bei geöffnetem Ventil V3, über die Restgasleitung 3 abgezogen werden. Es ist selbstverständlich auch denkbar, daß der am Adsorptionsmittel adsorbierte Teil des dem Adsorber A zugeführten Rohgases das zu gewinnende Produkt darstellt. In diesem Fall entweicht während der Druckaufbau- und/oder Adsorptionsphase über die Leitung 2 das Rest- bzw. Nebenproduktgas. Nach Beendigung der Adsorptionsphase wird dann über die Leitung 3 das Produktgas gewonnen. Zum Durchführen der Druckausgleiche und/oder Spülvorgänge zwischen den einzelnen Adsorbern ist das Austrittsende des Adsorbers A über eine Sammelleitung 9 mit den 5 Druckausgleichs- bzw. Spülleitungen 4 bis 8 verbunden. Die Druckausgleichs- bzw. Spülleitungen 4 bis 8 sind mittels der Ventile V4 bis V8 von der Sammelleitung 9 "abgetrennt". Während die Ventile V1 bis V3 als sog. Auf-Zu-Ventile ausgelegt sind, werden für die Ventile V4 bis V8 sog. Regelventile vorgesehen. Dies ist notwendig, da der zwischen den einzelnen Adsorbern strömende Druckausgleichs- bzw. Spülgasstrom kontrolliert werden muß. Sollten die Ventile V4 bis V8 als Regelventile ausgelegt sein, so ist das in der Figur dargestellte Regelventil RV in der Sammelleitung 9 überflüssig. Sind die Ventile V4 bis V8 jedoch lediglich als Auf-Zu-Ventile ausgelegt, so ist in der Sammelleitung 9 das Regelventil RV notwendig. Gemäß der Erfindung werden nicht nur gerade so viele Druckausgleichs- bzw. Spülleitungen und damit verbunden ebenso viele Ventile vorgesehen, sondern es wird wenigstens eine zusätzliche Druckausgleichs- bzw. Spülleitung nebst Ventil - in der Figur als Leitung 8 mit Ventil V8 dargestellt - angeordnet. Jeder der dargestellten Druckausgleichs- bzw. Spülleitungen 4 bis 8 ist mit jedem der anderen, in der Figur nicht dargestellten Adsorber wiederum über die gleiche Anzahl von Ventilen verbunden. Somit kann, z.B. bei einem Defekt des Ventils V4, die Druckausgleichs- bzw Spülleitung 4 außer Betrieb genommen werden, und statt dessen der Gasstrom über Ventil V8 der Druckausgleichs- bzw. Spülleitung 8 zugeführt werden. Der Begriff "Reserveventillinie" beinhalte neben der Druckausgleichs- bzw. Spülleitung 8 das Ventil V8 sowie die entsprechenden Ventile der nicht dargestellten Adsorber. Selbstverständlich ist es denkbar, daß neben der in der Figur dargestellten Reserveventillinie weitere Reserveventillinien vorgesehen sind. Dies macht jedoch nur dann Sinn, wenn aufgrund äußerer Faktoren, eine Abschaltung der erfindungsgemäßen Anlage unter allen Umständen vermieden werden soll. In einem derartigen Falle kann es sinnvoll sein, daß generell sämtliche Ventile doppelt oder mehrfach vorhanden sind.

Es ist für einen Fachmann selbstverständlich, daß sich der erfindungswesentliche Gedanke auf eine Vielzahl von unterschiedlichsten Adsorptionsanlagen anwenden läßt.

## Patentansprüche

1. Druckwechseladsorptionsanlage, mit mindestens zwei phasenverschoben arbeitenden Adsorptionseinheiten, bei der jede Adsorptionseinheit abwechselnd in den Arbeitszuständen "Adsorption" und "Desorption" mit einer oder mehrerer zwischengeschalteten Druckausgleichs- und/oder Spülphasen betrieben wird, und bei der zwischen den Adsorptionseinheiten Ventillinien für die Realisierung der Druckausgleichs- und/oder Spühlphasen vorgesehen sind, **dadurch gekennzeichnet**, daß zusätzlich zu der bzw. den vorhandenen Ventillinien für die Druckausgleichs- und/oder Spühlphasen mindestens eine Reserveventillinie vorgesehen ist.

2. Druckwechseladsorptionsanlage nach Anspruch 1, dadurch gekennzeichnet, daß die Reserveventillinie mit Auf-Zu-Ventilen ausgestattet ist.

3. Druckwechseladsorptionsanalge nach Anspruch 1, dadurch gekennzeichnet, daß die Reserveventillinie mit Regelventilen ausgestattet ist.

## Claims

1. Pressure-swing adsorption system having at least two adsorption units operating in a phase-shifted manner, in which each adsorption unit is operated alternately in the working states "adsorption" and "desorption" having one or more intermediate pressure-equilibration and/or purge phases, and in which valve lines for implementing the pressure-equilibration and/or purge phases are provided between the adsorption units, characterized in that, in addition to the valve line or valve lines present for the pressure-equilibration and/or purge phases, at least one back-up valve line is provided.

2. Pressure-swing adsorption system according to Claim 1, characterized in that the back-up valve line is equipped with on/off valves.

3. Pressure-swing adsorption system according to Claim 1, characterized in that the back-up valve line is equipped with control valves.

## Revendications

1. Dispositif d'adsorption à pression alternée, avec au moins deux unités d'adsorption opérant en décalage de phase, dans lequel chaque unité d'adsorption est conduite en alternance dans les conditions de travail "Adsorption" et "Désorption" avec une ou plusieurs phase(s) intermédiaire(s) d'équilibrage de pression et/ou de purge, et dans lequel il est prévu, entre les unités d'adsorption, des lignes de soupapes pour la réalisation des phases d'équilibrage de pression et/ou de purge, caractérisé en ce qu'il est prévu, en plus de la, respectivement des ligne(s) de soupapes existante(s) pour les phases d'équilibrage de pression et/ou de purge, au moins une ligne de soupapes de réserve.

2. Dispositif d'adsorption à pression alternée suivant la revendication 1, caractérisé en ce que la ligne de soupapes de réserve est équipée de soupapes tout ou rien.

3. Dispositif d'adsorption à pression alternée suivant la revendication 1, caractérisé en ce que la ligne de soupapes de réserve est équipée de soupapes de réglage.
